# EUROPÄISCHE PATENTANMELDUNG

(11) **EP 3 882 226 A1**
(43) Veröffentlichungstag der Anmeldung: **22.09.2021**
(21) Anmeldenummer: 20164237.8
(22) Anmeldetag: 19.03.2020
(51) Int. Cl.: C04B 35/111, C01F 7/02, C04B 35/636, C04B 35/64, C09K 3/14

(54) **SPHÄRISCHE ALUMINIUMOXIDKÖRPER**

(71) Anmelder: Sigmund Lindner GmbH, 95485 Warmensteinach (DE)
(72) Erfinder: SCHEIDT, Karin, 95028 Hof (DE); TRASSL, Stefan, 95445 Bayreuth (DE)
(74) Vertreter: Isarpatent

(57) **Zusammenfassung**

Die vorliegende Erfindung betrifft sphärische Aluminiumoxidkörper umfassend hochreines Aluminiumoxid, ein Verfahren sowie einen Grünkörper zur Herstellung der sphärischen Aluminiumoxidkörper, ein Verfahren zur Herstellung des Grünkörpers, wie auch Verwendungen der sphärischen Aluminiumoxidkörper.

## Beschreibung

Die vorliegende Erfindung betrifft sphärische Aluminiumoxidkörper umfassend hochreines Aluminiumoxid, ein Verfahren sowie einen Grünkörper zur Herstellung der sphärischen Aluminiumoxidkörper, ein Verfahren zur Herstellung des Grünkörpers, wie auch Verwendungen der sphärischen Aluminiumoxidkörper.

### Hintergrund der Erfindung

Keramische sphärische Körper werden heutzutage vorrangig mittels einer Granulations- bzw. Pelletierungsmethode in sehr großen Mengen gefertigt. Dabei wird fein pulverisierter Rohstoff in eine rotierende Granulationsmaschine gefüllt oder auf eine rotierende Scheibe gegeben. Nach und nach wird das Pulver mit einer Bindersuspension besprüht. Aufgrund des zugegebenen Binders und der Rotation bilden sich Granulate, woraus sich in Abhängigkeit der Maschinenparameter gleichmäßige Kugeln aufbauen. Jedoch können sich aufgrund des Rotationsprozesses schalenartige Strukturen sowie Poren im Inneren bilden. Poren im Gefüge können zum Kugelbruch führen.

Eine weitere Methode zur Herstellung von keramischen sphärischen Körpern ist das Pressverfahren, das aber hohe Produktionskosten bedingt und nur einen geringen Materialausstoß aufweist. Die Parameter für die Pressgranulate sind empfindlich und benötigen eine exakte Vorbereitung. Darüber hinaus ist eine Restporosität im Gefüge der Kugel möglich und kann dadurch zu Kugelbruch im Mahlprozess führen.

Eine andere Methode zur Herstellung ist ein Schmelzprozess, bei dem eine homogene Schmelze als Strahl oder Strang aus dem Ofen läuft. Mittels Spezialwerkzeugen werden Schmelztropfen aus dem Strang gefertigt. Aufgrund von Oberflächenspannung bilden sich aus den heißen Tropfen im Flug durch die Luft Kugeln. Hierdurch kühlen die Tropfen / Kugeln vollständig ab und werden verfestigt. Durch den Flug entstehen sogenannte kleine Satellitenkugeln auf den Oberflächen der großen Kugeln. Diese kleinen Kugeln kleben schwach an den großen Kugeln und lösen sich bei mechanischer Beanspruchung. Poren und Lufteinschlüsse im Gefüge der Kugel sind möglich und können dadurch zu Kugelbruch führen.

Sphärische Körper aus Aluminiumoxid spielen eine wichtige Rolle in der Aufbereitung von Rohstoffen mittels Kugelmühlen. Je nach Größe werden diese in Kugelmühlen zur Trockenzerkleinerung von Rohstoffen verwendet oder zur Nasszerkleinerung von Partikeln in Suspensionen mittels Rührwerkskugelmühlen. Insbesondere bei der Nasszerkleinerung spielen Materialparameter der Kugeln eine entscheidende Rolle, da sie sich auf den Prozess und die Qualität des Produktes unmittelbar auswirken. Hierzu zählen die Dichte der Kugel, das innere Gefüge und die Oberflächenbeschaffenheit, die Rundheit, die Reinheit der Zusammensetzung sowie die Größe und Verteilung der Kugeln. Die Parameter wirken sich aus auf die Haltbarkeit und Standzeit der Kugeln sowie die Verunreinigungen des Produkts durch den Verschleiß der Kugeln. Neben der Verwendung sphärischer Körper als Hilfsmittel zur Partikelzerkleinerung in Mühlen können sphärische Körper aus hochreinem Aluminiumoxid als Füllmaterialien für Kunststoffe eingesetzt werden. Eine weitere Anwendung, bei der die Rundheit und Reinheit der Kugeln, vorrangig mit einem Anteil an Aluminiumoxid (Al₂O₃) ≥ 99,99 %, eine bedeutende Rolle spielen, ist als Vorstufe zur Fertigung von elektronischen Bauteilen sowie für Saphire. Hierbei wird das polykristalline Aluminiumoxid in sphärischer Form und mit einer Reinheit von ≥ 99,99 % (4N-Al₂O₃) als Schüttung in einer Form vorgelegt und mittels Erhitzens > 1.100 °C in die monokristalline Modifikation Saphir umgewandelt. Reine und hoch-transparente Saphir-Einkristalle finden zunehmend Anwendung in der Optik. Die Zusammensetzung der Vorstufe und der Anteil an Fremdstoffen sind dabei von großer Bedeutung. Eine weitere Verwendung ist die Beschichtung von Polymer-Membranen in Batterien mit hochreinem Aluminiumoxid zur Verbesserung der Temperaturstabilität und zur Verminderung von Kurzschlüssen während des Betriebes.

Jedoch wäre es für die Anwendungen vorteilhaft, Kugeln mit höherer Dichte und hoher Rundheit und Reinheit zu haben.

Es ist somit Aufgabe der Erfindung, sphärische Aluminiumoxidkörper aus hochreinem Aluminiumoxid für die Verwendung als verschleißfester gesinterter Mahlkörper oder als Füllkörper oder als Vorstufe für elektronische Bauteile sowie für monokristalline Saphire bereitzustellen.

Die Erfinder haben gefunden, dass über eine Herstellung eines Grünkörpers durch Vertropfung sowie ein anschließendes Sintern sphärische Aluminiumoxidkörper mit verbesserten Eigenschaften hinsichtlich Verschleißfestigkeit, Rundheit, Reinheit und Dichte, insbesondere auch mit kleiner Größe, hergestellt werden können.

Die Erfinder haben zudem insbesondere gefunden, dass auf Basis eines Sol-Gel-Reaktionsprozesses kombiniert mit einer Vertropfungs-Technologie eine effiziente Herstellung von sphärischen hochreinen Aluminiumoxid-Kugeln für die genannten Anwendungen ermöglicht wird.

Ein erster Aspekt der vorliegenden Erfindung betrifft einen sphärischen Aluminiumoxidkörper, umfassend Al₂O₃ in einer Menge von 99,90 und 99,995 Gew.%, bezogen auf den sphärischen Aluminiumoxidkörper, wobei der sphärische Aluminiumoxidkörper ein Breiten- zu Längenverhältnis (b/l₃) von 0,900 bis 0,999, eine Dichte von 3,91 bis 3,98 g/cm³ und eine Größe von 0,01 bis 1,80 mm aufweist.

In einem weiteren Aspekt betrifft die Erfindung einen Grünkörper, umfassend eine Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen, wobei der Grünkörper ein Breiten- zu Längenverhältnis (b/l₃) von 0,900 bis 0,999 und eine Größe von 0,010 bis 2,500mm aufweist.

Zudem betrifft die Erfindung in einem weiteren Aspekt ein Verfahren zum Herstellen eines erfindungsgemäßen sphärischen Aluminiumoxidkörpers, umfassend:
Bereitstellen eines erfindungsgemäßen Grünkörpers, und
Sintern des Grünkörpers bei einer Temperatur von 1200 bis 1800°C.

Weiterhin offenbart ist ein Verfahren zum Herstellen eines erfindungsgemäßen Grünkörpers, umfassend:
Bereitstellen einer Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen;
Vermischen der Mischung aus Partikeln von Aluminiumoxid mit entionisiertem Wasser zur Herstellung einer Grünkörperrohmischung bis zum Erreichen eines Feststoffgehalts von 40 bis 80 Gew.%, bezogen auf die Grünkörperrohmischung; und
Vertropfen der Grünkörperrohmischung zu einem Grünkörper.

Offenbart ist auch die Verwendung eines erfindungsgemäßen sphärischen Aluminiumoxidkörpers zur Aufbereitung von Aluminiumoxid-Rohstoffen, zur Fertigung von Saphiren, als Füllmaterial, und zur Fertigung von elektronischen und/oder optischen Komponenten, sowie eines erfindungsgemäßen Grünkörpers zur Fertigung von Saphiren.

Weitere bevorzugte Ausführungsformen finden sich in den abhängigen Ansprüchen.

### Beschreibung der Figuren

Die Erfindung wird nunmehr im Detail mit Bezug auf die beigefügten Figuren erläutert, wobei diese die Erfindung jedoch nicht einschränken.

### Figuren

Figur 1 zeigt schematisch ein beispielhaftes erfindungsgemäßes Verfahren zum Herstellen eines erfindungsgemäßen sphärischen Aluminiumoxidkörpers.
In Figur 2 ist schematisch ein beispielhaftes erfindungsgemäßes Verfahren zum Herstellen eines erfindungsgemäßen Grünkörpers dargestellt.
Ein alternatives beispielhaftes, erfindungsgemäßes Verfahren zum Herstellen eines erfindungsgemäßen Grünkörpers ist schematisch in Figur 3 dargestellt.
Figur 4 zeigt ein Gefüge gesinterter Aluminiumoxid-Körper mittels Vertropfungs-Technologie im erfindungsgemäßen Beispiel 1.
In Figur 5 ist ein Gefüge gesinterter Aluminiumoxid-Körper des Vergleichsbeispiels 1 dargestellt, wobei die gesinterten Aluminiumoxid-Körper mittels Wirbelschicht-Granulations-Technologie hergestellt wurden.

Detaillierte Beschreibung der Erfindung.

### Definitionen

Sphärische Körper sind im Rahmen der Erfindung runde dreidimensionale Körper, bei denen ein Breiten- zu Längenverhältnis (b/l₃, welches einen gewogenen Mittelwert einer ausgewählten Kenngröße, errechnet über einen gerätespezifischen Algorithmus des Retsch Camsizers® darstellt) zwischen und einschließlich 0,900 und 1,0 vorliegt. Hierbei ist b/l₃ der Quotient aus min (xc) / max (xFe) für Werte min (xc) und max (xFe) einer gemessenen Anzahl (=3) von xc und xFe Werten.

min (xc) ist hierbei die kürzeste aller gemessenen maximalen Sehnen einer Partikelprojektion. max (xFe) ist der Abstand zweier Tangenten, die senkrecht zur Messrichtung an das Partikel angelegt wurden; max: bedeutet hierbei den größten Feret-Durchmesser eines Partikels, ermittelt aus verschiedenen Messrichtungen, über alle Richtungen gemittelt.

Die theoretische Dichte von Aluminiumoxid ist im Rahmen der vorliegenden Erfindung 3,99 g/cm³, wie sie in H. Salmang, H. Scholze, R. Telle, Keramik,7. Auflage, 2007, S. 784 angegeben ist. Aus kristallografischen Röntgenbeugungsmessungen wird hierbei bei einer idealen Besetzung der Plätze die theoretische Dichte des Aluminiumoxids bestimmt. Hierbei ist anzumerken, dass die Angabe der theoretischen Dichte von Aluminiumoxid in verschiedenen Veröffentlichungen abweichen kann, sodass sich hier in verschiedenen Stand der Technik Dokumenten auch andere Abweichungen von der theoretischen Dichte als hier angegeben ergeben können, sodass vorliegend die absolute Dichte als maßgebliche Größe erachtet wird.

Entionisiertes Wasser ist im Rahmen der Erfindung Wasser, welchem durch ein Verfahren wie beispielsweise lonenaustausch oder Umkehrosmose Ionen entzogen worden sind, so dass es Ionen mit einer geringeren Konzentration aufweist als Leitungs- oder Trinkwasser.

Die mittlere volumetrische Partikelgröße von einer Vielzahl von Partikeln kann vorliegend auf geeignete Weise bestimmt werden, beispielsweise mittels digitaler Bildverarbeitung, beispielsweise mittels einer CAMSIZER® Vorrichtung, oder mittels Siebanalyse. Die volumetrischen Partikelgrößen d50 und d90 werden erfindungsgemäß über ein Laserbeugungsmessverfahren nach DIN ISO 13320-1 bestimmt.

Vorliegend beziehen sich Mengenangaben auf Gew.%, soweit nicht anderweitig beschrieben oder aus dem Zusammenhang ersichtlich.

Angaben von Bereichen im Rahmen der vorliegenden Erfindung schließen die Randnummern ein, soweit nicht anderweitig angegeben oder auf andere Weise ersichtlich.

Ein erster Aspekt der vorliegenden Erfindung betrifft einen sphärischen Aluminiumoxidkörper, umfassend Al₂O₃ in einer Menge von 99,90 und 99,995 Gew.%, bezogen auf den sphärischen Aluminiumoxidkörper, wobei der sphärische Aluminiumoxidkörper ein Breiten- zu Längenverhältnis (b/I3) von 0,900 bis 0,999, eine Dichte von 3,91 bis 3,98 g/cm³ und eine Größe von 0,01 bis 1,80 mm aufweist.

Die Menge an Al₂O₃ im erfindungsgemäßen sphärischen Aluminiumoxidkörper ist bevorzugt 99,95 Gew.%, oder mehr, weiter bevorzugt 99,99 Gew.% oder mehr, bezogen auf den sphärischen Aluminiumoxidkörper. Überraschenderweise können durch das erfindungsgemäße Verfahren auch durch die Herstellung hochreiner, sphärischer Grünkörper entsprechend hoher Reinheit im finalen sphärischen Aluminiumoxidkörper bereitgestellt werden, da ein Eintrag von Verunreinigungen vermieden werden kann. Insbesondere können sphärische Aluminiumoxidkörper umfassend hochreines Aluminiumoxid ≥ 99,99 % bereitgestellt werden.

Im erfindungsgemäßen sphärischen Aluminiumoxidkörper kann das Breiten- zu Längenverhältnis (b/l₃) beispielsweise 0,910 bis 0,995, bevorzugt 0,925 bis 0,990,weiter bevorzugt 0,930 bis 0,980 sein. Das Breiten-zu Längenverhältnis wird hierbei wie oben beschrieben ermittelt.

Erfindungsgemäße sphärische Aluminiumoxidkörper weisen eine Größe von 0,01 bis 1,80 mm auf, bevorzugt von 0,01 bis 1,00 mm, weiter bevorzugt 0,02 bis 0,90 mm, weiter bevorzugt 0,03 bis 0,80 mm, noch weiter bevorzugt 0,05 bis 0,45 mm, beispielsweise 0,1 bis 0,3 mm. Insbesondere kleine Partikel können durch das erfindungsgemäße Herstellungsverfahren sehr gut hergestellt werden, bei größeren Größen, insbesondere > 1,80 mm, wird die Rundheit verschlechtert. Die Größe ist hierbei insbesondere angegeben als der Durchmesser der sphärischen Aluminiumoxidkörper, insbesondere der maximale Durchmesser des sphärischen Aluminiumoxidkörpers.

Die Dichte des sphärischen Aluminiumoxidkörpers kann auf geeignete Weise sowohl mit einem Helium-Gaspyknometer als auch mit einem Glaspyknometer unter Verwendung von H₂O oder Ethanol bestimmt werden, wobei sich hierbei die gleichen Ergebnisse ergeben. Für beide Messmethoden wird die Probe, also der sphärische Aluminiumoxidkörper, als auch das Medium, also Helium oder H₂O oder Ethanol, auf Raumtemperatur von 20°C temperiert und der exakte Wert für die Berechnung erfasst. Hierbei ist anzumerken, dass die Dichte des Grünkörpers nur mit dem Gaspyknometer gemessen werden kann, da der Grünkörper in wässrigen Medien aufquillt bzw. instabil wird und dadurch keine Werte bestimmbar sind. Entsprechend wird die Dichte des Grünkörpers auf geeignete Weise mit einem Gaspyknometer, wie beschrieben, bestimmt. Die Dichte des erfindungsgemäßen sphärischen Aluminiumoxidkörpers beträgt von 3,91 bis 3,98 g/cm³, bevorzugt von 3,92 bis 3,97 g/cm³, weiter bevorzugt von 3,93 bis 3,96 g/cm³, beispielsweise etwa 3,95 g/cm³.

Gemäß bestimmten Ausführungsformen umfasst der sphärische Aluminiumoxidkörper mindestens ein Metall M, das bevorzugt ausgewählt ist aus Calcium, Eisen, Magnesium, Silizium, Titan, Zirkonium, sowie Legierungen und Mischungen davon.

Gemäß bestimmten Ausführungsformen umfasst der sphärische Aluminiumoxidkörper weiter mindestens ein Oxid eines Metalls M, wobei das Metall M nicht besonders beschränkt ist. Im sphärischen Aluminiumoxidkörper kann also das Aluminiumoxid mit weiteren Oxiden von Elementen M vermischt sein. Gemäß bestimmten Ausführungsformen ist das mindestens eine Metall M ausgewählt aus Calcium, Eisen, Magnesium, Silizium, Titan, Zirkonium und Mischungen davon, wobei bevorzugte Oxide CaO, Fe₂O₃, MgO, SiO₂, TiO₂ und/oder ZrO₂ sind. Die bevorzugten Metalle M, also Calcium, Eisen, Magnesium, Silizium, Titan, Zirkonium und Mischungen davon, können ein besseres Gefüge erzielen im Vergleich zur Anwesenheit anderer Metalle.

Der Gehalt an Oxiden von weiteren Metallen M, bevorzugt Oxiden von Calcium, Eisen, Magnesium, Silizium, Titan, Zirkonium, insbesondere bevorzugt CaO, Fe₂O₃₁ MgO, SiO₂, TiO₂ oder ZrO₂, kann 0 bis 100 mg/kg, bevorzugt >0 bis 100 mg/kg, weiter bevorzugt 10 bis 90 mg/kg betragen. Gemäß bestimmten Ausführungsformen beträgt der Gehalt an Oxid des mindestens eines Metalls M >0 bis 100 mg/kg. Hierdurch kann immer noch eine ausreichende Reinheit des Aluminiumoxids beibehalten werden. Die Einheit und Größe 1 mg/kg entspricht 1 ppm (parts per million) bzw. 0,0001 %. Insbesondere die Metalle Magnesium und/oder Zirkonium, besonders die Oxide der Metalle Magnesium und/oder Zirkonium, wie MgO und/oder ZrO₂, können zu einer Verbesserung der Verschleißeigenschaften der Keramik führen.

Daneben kann ein erfindungsgemäßer sphärischer Aluminiumoxidkörper noch nicht vermeidbare Verunreinigungen enthalten, bevorzugt in Mengen von 100 mg/kg oder weniger, weiter bevorzugt 50 mg/kg oder weniger, noch weiter bevorzugt 10 mg/kg oder weniger.

Gemäß bestimmten Ausführungsformen weist der sphärische Aluminiumoxidkörper ein inneres Gefüge mit einem Porenanteil im Bezug zur Gesamtfläche von ≤ 0,1 %, bevorzugt ≤ 0,05 %, auf. Dier Ermittlung des Porenanteils erfolgt hierbei mittels eines mikroskopischen Verfahrens, insbesondere anhand von Querschliffen der Kugeln und anschließender Stereomikroskopie (Polarisationsmikroskop) mit software-unterstützter Bestimmung des Porenanteils in Bezug auf die Gesamtfläche der quergeschliffenen Kugel. Die Herstellung von Querschliffen erfolgt hier beispielsweise in der Reihenfolge Einbetten der Kugeln in ein Härter / Harz-Gemisch, Vorschleifen und Planschleifen der Proben mittels Schleifscheibe. Als Schmiermittel beim Schleifen kann beispielsweise jeweils eine Diamant-Suspension und ein Alkohol-Wasser-Gemisch verwendet werden.

Gemäß bestimmten Ausführungsformen ist der erfindungsgemäße Aluminiumoxidkörper hergestellt aus zerkleinerten und/oder de-agglomerierten, bevorzugt hochreinen, Aluminiumoxidpartikeln, wie nachfolgend beschrieben. Dies macht sich insbesondere in der Porosität sowohl des Grünkörpers wie auch nach dem Sintern im sphärischen Aluminiumoxid bemerkbar, sodass hier eine weitere Verbesserung der Porosität erzielt werden kann.

Gemäß bestimmten Ausführungsformen wird der erfindungsgemäße sphärische Aluminiumoxidkörper durch das erfindungsgemäße Verfahren zum Herstellen des sphärischen Aluminiumoxidkörpers hergestellt, insbesondere gekoppelt mit dem erfindungsgemäßen Verfahren zum Herstellen eines Grünkörpers, insbesondere über einen Sol-Gel-Prozess, kombiniert über eine Vertropfungs-Technologie. Hierdurch kann eine besonders hohe Rundheit und eine hohe Dichte erreicht werden.

Gemäß bestimmten Ausführungsformen liegt eine Vielzahl sphärischer Aluminiumoxidkörper vor, als 2 oder mehr, 10 oder mehr, 100 oder mehr oder 100 oder mehr.

Weiterhin offenbart ist ein Grünkörper, umfassend eine Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen, wobei der Grünkörper ein Breiten- zu Längenverhältnis (b/l₃) von 0,900 bis 0,999 und eine Größe von 0,010 bis 2,500 mm, insbesondere 0,013 bis 2,340 mm aufweist.

Gemäß bestimmten Ausführungsformen weisen die Partikel von Aluminiumoxid Al₂O₃ in einer Menge von 99,95 Gew.%, oder mehr, weiter bevorzugt 99,99 Gew.% oder mehr, auf. Daneben können die Partikel von Aluminiumoxid weiter mindestens ein Metall M, insbesondere ein Oxid eines Metalls M, wobei das Metall M nicht besonders beschränkt ist, aufweisen. In den Partikeln von Aluminiumoxid kann also das Aluminiumoxid mit weiteren Oxiden von Elementen M vermischt sein. Gemäß bestimmten Ausführungsformen ist das mindestens eine Metall M ausgewählt aus Calcium, Eisen, Magnesium, Silizium, Titan, Zirkonium und Mischungen davon, wobei bevorzugte Oxide CaO, Fe₂O₃, MgO, SiO₂, TiO₂ und/oder ZrO2 sind. Der Gehalt an Oxiden von weiteren Metallen M, bevorzugt Oxiden von Calcium, Eisen, Magnesium, Silizium, Titan, Zirkonium, insbesondere bevorzugt CaO, Fe₂O₃, MgO, SiO₂, TiO₂ oder ZrO₂, kann 0 bis 100 mg/kg, bevorzugt >0 bis 100 mg/kg, weiter bevorzugt 10 bis 90 mg/kg betragen. Gemäß bestimmten Ausführungsformen beträgt der Gehalt an Oxid des mindestens eines Metalls M >0 bis 100 mg/kg. Hierdurch kann immer noch eine ausreichende Reinheit des Aluminiumoxids beibehalten werden.

Daneben können die Partikel von Aluminiumoxid noch nicht vermeidbare Verunreinigungen enthalten, bevorzugt in Mengen von 100 mg/kg oder weniger, weiter bevorzugt 50 mg/kg oder weniger, noch weiter bevorzugt 10 mg/kg oder weniger.

Gemäß bestimmten Ausführungsformen umfasst der Grünkörper weiter mindestens ein Bindemittel in einer Menge von 0 bis 3,5 Gew.%, z.B. >0 bis 3,5 Gew.%, bevorzugt 0,05 bis 2,0 Gew.%, weiter bevorzugt 0,1 bis 1,0 Gew.%, bezogen auf den Grünkörper. Das Bindemittel ist nicht besonders beschränkt, und es können die Bindemittel verwendet werden, die üblicherweise bei der Herstellung von Grünkörpern, insbesondere Metall umfassenden Grünkörpern, beispielsweise Grünkörpern zur Herstellung von Aluminiumoxid-Bauteilen oder -kugeln, etc., Anwendung finden, wie beispielsweise Polysaccharide, beispielsweise pflanzliche Polysaccharide, sowie Methylcellulose, Dextrin, Stärken, Alginate, Glykole, Polyvinylalkohol und/oder Polyvinylacetat.

Zudem kann der Grünkörper ggf. noch Spuren von Hilfsmitteln wie Dispergierhilfsmittel enthalten, wobei er bevorzugt jedoch frei von Hilfsmitteln ist. Bei der Herstellung der Grünkörper können 0 bis 3,0 Gew.%, bevorzugt >0 bis 3 Gew.%, weiter bevorzugt 0,05 bis 2,0 Gew.%" noch weiter bevorzugt 0,1 bis 1,0 Gew.% mindestens eines Hilfsmittels Anwendung finden, wobei das Hilfsmittel nicht besonders beschränkt ist. Beispielsweise kann als Hilfsmittel ein Dispergierhilfsmittel zur Anwendung kommen, beispielsweise auf Basis eines anionischen Polyelektrolyts, auf Basis von Carbonsäuren und/oder von Aminoalkoholen und/oder Polyacrylsäuren, Polyglykolsäuren, organischen Basen wie Triethylamin und/oder andere Carbonsäuren wie Essigsäure.

Gemäß bestimmten Ausführungsformen weist der Grünkörper eine Grünkörperdichte von 75 bis 99 %, bevorzugt zwischen 88 und 99 %, weiter bevorzugt zwischen 90 und 99 %, besonders bevorzugt zwischen 93 und 99 % und insbesondere zwischen 93 und 97%, der theoretischen Dichte von hochreinem Aluminiumoxid auf. Zur Bestimmung der Grünkörperdichte in Bezug auf die theoretische Dichte kann beispielsweise das folgende Verfahren zur Anwendung kommen: Die mittels Pyknometer, wie oben beschrieben, gemessene Dichte des Grünkörpers wird ins Verhältnis zur theoretischen Dichte, wie oben angegeben, gesetzt, woraus sich die Prozentwerte ergeben.

Der Grünkörper kann in Form einer Kugel mit einem Breiten- zu Längenverhältnis (b/l₃) zwischen 0,90 und 0,99, bevorzugt zwischen 0,93 und 0,98, weiter bevorzugt zwischen 0,93 und 0,97 vorliegen, wie oben bestimmt.

Zudem offenbart ist ein Verfahren zum Herstellen des erfindungsgemäßen sphärischen Aluminiumoxidkörpers, umfassend:
Bereitstellen des oben beschriebenen, erfindungsgemäßen Grünkörpers, und
Sintern des Grünkörpers bei einer Temperatur von 1200 bis 1800°C.

Mit dem erfindungsgemäßen Verfahren zum Herstellen eines erfindungsgemäßen sphärischen Aluminiumoxidkörpers kann insbesondere ein erfindungsgemäßer sphärischer Aluminiumoxidkörper hergestellt werden. Entsprechend betreffen Angaben zum erfindungsgemäßen sphärischen Aluminiumoxidkörper auch das Verfahren zum Herstellen eines erfindungsgemäßen sphärischen Aluminiumoxidkörpers und vice versa.

Das Bereitstellen des erfindungsgemäßen Grünkörpers ist nicht besonders beschränkt. Beispielsweise kann ein erfindungsgemäßer Grünkörper durch das nachfolgend beschriebene Verfahren zum Herstellen eines erfindungsgemäßen Grünkörpers bereitgestellt werden.

Das Sintern des Grünkörpers ist ebenfalls nicht besonders beschränkt, sofern es bei einer Temperatur von 1200 bis 1800°C, bevorzugt 1200 bis 1700°C, weiter bevorzugt von 1350 bis 1700°C, besonders bevorzugt von 1400 bis 1650°C, z.B. 1400 - 1600°C, - die Grenzen eingeschlossen, erfolgt. Die Sinterung findet, abhängig vom Werkstoff, bei Temperaturen zwischen 1200 und 1800 °C statt, um die finalen mechanischen Eigenschaften zu erhalten.

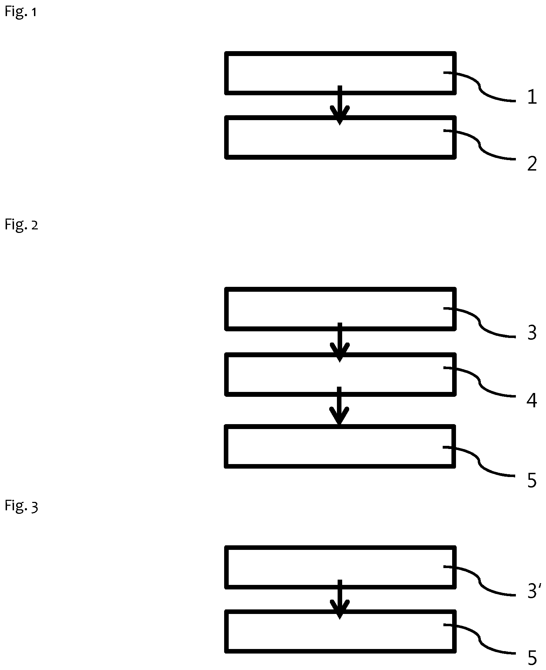

Ein beispielhaftes erfindungsgemäßes Verfahren zum Herstellung eines erfindungsgemäßen sphärischen Aluminiumoxidkörpers ist in Figur 1 gezeigt. Hierbei schließt sich an den Schritt des Bereitstellens des erfindungsgemäßen Grünkörpers 1 ein Schritt des Sinterns des Grünkörpers 2 bei einer Temperatur von 1200 bis 1800°C an.

Weiterhin offenbart ist ein Verfahren zum Herstellen eines erfindungsgemäßen Grünkörpers, umfassend:
Bereitstellen einer Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen;
Vermischen der Mischung aus Partikeln von Aluminiumoxid mit entionisiertem Wasser zur Herstellung einer Grünkörperrohmischung bis zum Erreichen eines Feststoffgehalts von 40 bis 80 Gew.%, bezogen auf die Grünkörperrohmischung; und
Vertropfen der Grünkörperrohmischung zu einem Grünkörper.

Mit dem erfindungsgemäßen Verfahren zum Herstellen eines erfindungsgemäßen Grünkörpers kann insbesondere ein erfindungsgemäßer Grünkörper hergestellt werden. Entsprechend betreffen Angaben zum erfindungsgemäßen Grünkörper auch das Verfahren zum Herstellen eines erfindungsgemäßen Grünkörpers und vice versa.

Die Partikel von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen, können auch als einfach als Partikel von Aluminiumoxid oder Rohstofffeinstpartikel bezeichnet werden.

Im Verfahren zum Herstellen eines erfindungsgemäßen Grünkörpers können die Schritte des Bereitstellens einer Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen; und des Vermischens der Mischung aus Partikeln von Aluminiumoxid mit entionisiertem Wasser zur Herstellung einer Grünkörperrohmischung bis zum Erreichen eines Feststoffgehalts von 40 bis 80 Gew.%, bezogen auf die Grünkörperrohmischung; gemäß bestimmten Ausführungsformen auch gleichzeitig erfolgen, beispielsweise in einer Mühle, z.B. in einer Rührwerkskugelmühle, welche nicht besonders beschränkt ist.

Das Bereitstellen einer Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen, ist nicht besonders beschränkt.

Ebenso ist der Schritt des Vermischens der Mischung aus Partikeln von Aluminiumoxid mit entionisiertem Wasser zur Herstellung einer Grünkörperrohmischung bis zum Erreichen eines Feststoffgehalts von 40 bis 80 Gew.%, bezogen auf die Grünkörperrohmischung nicht besonders beschränkt. Gemäß bestimmten Ausführungsformen erfolgt ein Vermischen mit entionisiertem Wasser zur Herstellung einer Grünkörperrohmischung bis zum Erreichen eines Feststoffgehalts von 45 bis 75 Gew.%, bevorzugt 50 bis 70 Gew.%, bezogen auf die Grünkörpermischung. Wenn der Feststoffgehalt zu gering ist, kann der Grünkörper unförmig und platt werden. Bei einem zu hohen Feststoffgehalt erschwert sich das Herstellungsverfahren und kann länger dauern, um eine homogene Durchmischung zu erreichen.

Das Vermischen der Partikel von Aluminiumoxid mit dem entionisierten Wasser erfolgt bevorzugt bis zum Erreichen einer homogenen Mischung, wobei durch das Vermischen ein Sol bzw. Kolloid hergestellt wird, die je nach Ansatzgröße ein entsprechendes Zeitfenster benötigt. Homogen ist in diesem Zusammenhang eine Mischung, welche ohne mit dem Auge erkennbare oder durch Aufstreichen auf eine Fläche sichtbare Agglomerate gekennzeichnet ist. Die beiden Schritte des Bereitstellens einer Mischung aus Partikeln von Aluminiumoxid und des Vermischens der Mischung aus Partikeln von Aluminiumoxid mit entionisiertem Wasser zur Herstellung einer Grünkörperrohmischung stellen also einen Sol-Gel-Prozess dar. Der Sol-Gel-Prozess hat große Vorteile hinsichtlich des homogenen inneren Gefüges des Endprodukts. Die Grünkörper und somit die sphärischen Aluminiumoxidkörper sind insbesondere komplett frei von Poren, Lufteinschlüssen und/oder Schalenstrukturen. Der Prozess zeichnet sich darüber hinaus insbesondere durch einen hohen Materialausstoß aus. Zudem können die Grünkörper und somit die sphärischen Aluminiumoxidkörper in einem engen und homogenen Größenspektrum (+/- 0,1 mm) und mit sehr guter Rundheit produziert werden.

Gemäß bestimmten Ausführungsformen werden zur Grünkörperrohmischung weiter 0 bis 3,5 Gew.%, z.B. >0 bis 3,5 Gew.%, bevorzugt 0,05 bis 2,0 Gew.%" noch weiter bevorzugt 0,1 bis 1,0 Gew.%, mindestens eines Bindemittels, wie oben angegeben, und/oder 0 bis 3,5 Gew.%, z.B. >0 bis 3 Gew.%, weiter bevorzugt 0,05 bis 2,0 Gew.%" noch weiter bevorzugt 0,1 bis 1,0 Gew.% mindestens eines Hilfsmittels, beispielsweise eines Dispergierhilfsmittels, wie oben angegeben, (jeweils bezogen auf die Grünkörperrohmischung) gegeben, bevor diese zu einem Grünkörper vertropft wird. Die Zugabemenge an Bindemittel und / oder entionisiertem Wasser bestimmt die Viskosität der weiter zu verarbeitenden Suspension, die eine Mischung aus Partikeln von Aluminiumoxid, entionisiertem Wasser, sowie ggf. Hilfsmittel und/oder Bindemittel, enthält. Bevorzugte Viskositäten liegen zwischen 200 und 3.500 mPas, wobei die herzustellende Kugelgröße üblicherweise an die Höhe der Viskosität gekoppelt ist. Die Viskosität kann hierbei beispielsweise mittels eines Rheometers nach DIN 53019-1 und einem Platte-Kegel-System bestimmt werden.

Gemäß bestimmten Ausführungsformen wird ein prozentualer Gewichtsanteil von Partikeln von Aluminiumoxid zu entionsiertem Wasser von 40 bis 80 Gew.%, bevorzugt von 45 bis 75 Gew.%, weiter bevorzugt von 50 bis 70 Gew.% in der Grünkörperrohmischung eingestellt. Die Menge an entionisiertem Wasser, die den Partikeln von Aluminiumoxid zugesetzt wird, kann jedoch geeignet, auch ggf. unter Berücksichtigung der Zugabemenge an Hilfsmittel und/oder der Menge an Bindemittel, bestimmt werden.

Durch das Vermischen kann ein Sol umfassend de-agglomerierte und/oder zerkleinerte Partikel von Aluminiumoxid bereitgestellt werden. Insbesondere wird eine homogene Suspension als Grünkörperrohmischung hergestellt. Die Grünkörperrohmischung wird auch als Schlicker bezeichnet. Durch die Zugabe von entionisiertem Wasser zur Mischung aus Partikeln von Aluminiumoxid, sowie ggf. Bindemittel und/oder Hilfsmittel, wird also ein Schlicker hergestellt. Dieser Schlicker wird dann über einen Sol-Gel-Prozess, der mit einer Vertropfungs-Technologie kombiniert ist, zu einem Grünkörper verarbeitet.

Das Vertropfen der Grünkörperrohmischung zu einem Grünkörper ist nicht besonders beschränkt. Beispielsweise kann das Vertropfen durch Beförderung mittels einer Pumpe, z.B. bei einer Frequenz vom bis 100.000 Hz, z.B. 1 bis 10.000 Hz, z.B. 30 bis 70 Hz, durch Düsen und/oder Kanülen, erfolgen, beispielsweise bei einem Vertropfungswinkel von 30 bis 90° (also senkrecht) bezogen auf eine Reaktionslösung, in die das Vertropfen erfolgt, beispielsweise bei einem Winkel von 40 bis 90°, z.B. ca. 45° bis 90°, z.B. bei 45°, wobei bei größeren Winkel größere Partikel hergestellt werden.

Gemäß bestimmten Ausführungsformen erfolgt das Vertropfen der Grünkörperrohmischung in eine Reaktionslösung, die Ionen aus Salzen und entionisiertes Wasser enthält. Hierfür wird insbesondere eine Lösung bestehend aus entionisiertem Wasser und Salzen angesetzt. Der Anteil der Ionen aus Salzen kann hierbei bis zur maximalen Löslichkeit der eingesetzten Salze im Wasser betragen.

Beispielhafte Verfahren zur Bildung von Tropfen mittels Suspensionen sind aus der US20040007789A1, der US5484559A, der US6197073B1, der US5500162A, der US4043507A, der US3579721A sowie aus der EP2777806A1 bekannt, auf die hiermit bezüglich des Vertropfungsverfahrens vollumfänglich Bezug genommen wird. So kann beispielsweise der Schlicker durch eine Düse und/oder Kanüle auf eine rotierende Platte gelenkt werden, wobei beim Aufprall feine homogene Tropfen gebildet werden, die dann durch eine nicht mischbare Flüssigkeit geleitet werden, um so das Wasser abzutrennen und den Grünkörper zu bilden. Alternativ kann beispielsweise auch ein Vibrationsvertropfungsverfahren verwendet werden, bei dem ein Material-Strahl durch eine perforierte, vibrierende Platte gelenkt wird, die mit einer Resonanzfrequenz des Strahls vibriert, so dass gleichmäßige Tropfen gebildet werden. Des Weiteren ist die Erzeugung von Tropfen über das Abschneiden eines Fluidstrangs, der aus einer Öffnung einer Düse und/oder Kanüle austritt, mit einer Trenneinheit durchführbar. Das Vertropfungsverfahren ist jedoch erfindungsgemäß nicht besonders beschränkt.

Beim Vertropfen wird beispielsweise der Schlicker durch Düsen und/oder Kanülen gefördert und es bilden sich Tropfen. Während des freien Falls, beispielsweise durch die Luft und/oder in einer Reaktionslösung, durch die ein chemischer Prozess ablaufen kann, bildet sich aus dem Tropfen aufgrund der Oberflächenspannung eine Kugel. Die Kugeln härten aus, wobei die Aushärtung von der Oberfläche hinein in den Kern der Kugel erfolgt.

Nach einer ausreichenden Aushärtezeit, die beispielsweise zwischen 10 und 120 min. liegen kann, können die Grünkörper gemäß bestimmten Ausführungsformen aus der Lösung entfernt und ggf. in Wasser, insbesondere entionisiertem Wasser, gewaschen werden. Gemäß bestimmten Ausführungsformen werden die Grünkörper zwischen 30 und 120 min. und zwischen 80 und 120 °C, z.B. mittels einer IR-Strahlungsquelle, zur Entfernung der Restfeuchte getrocknet.

Durch das erfindungsgemäße Verfahren zur Herstellung eines, insbesondere sphärischen, Grünkörpers aus Aluminiumoxid über einen Sol-Gel-Prozess kombiniert mit einer Vertropfungs-Technologie wird somit ein Grünkörper hergestellt.

Gemäß bestimmten Ausführungsformen wird die Mischung aus Partikeln von Aluminiumoxid mittels eines Zerkleinerungs- und/oder eines Dispergierungsverfahrens in einer Rührwerkskugelmühle hergestellt, beispielsweise unter Verwendung von Mahlkörpern definierter Größenverteilung, welche an die zu erzielende Größe der Partikel von Aluminiumoxid angepasst sind.

Insbesondere durch eine Rührwerkskugelmühle lässt sich eine gute Deagglomeration und ggf. auch noch eine weitere Zerkleinerung der Partikel von Al₂O₃ erreichen, sodass effektiv ein Grünkörper durch Vertropfen hergestellt werden kann, wobei auch Grünkörper kleiner Größe gut hergestellt werden können. Durch eine Kombination von insbesondere einem Sol-Gel-Prozess mit einer Vertropfungs-Technologie und mittels aufbereiteter zerkleinerter und/oder deagglomerierter Partikel von Aluminiumoxid können effektiv sinterfähige Grünkörper hergestellt werden.

Gemäß bestimmten Ausführungsformen wird das entionisierte Wasser in der Rührwerkskugelmühle zu den Partikeln von Aluminiumoxid zugegeben. Dadurch können effektiv eine De-Agglomeration sowie ggf. auch eine Zerkleinerung erfolgen, und es kann effektiv eine, insbesondere homogene, Suspension für den folgenden Vertropfungsschritt bereitgestellt werden. Gemäß bestimmten Ausführungsformen kann in einer Mühle, insbesondere einer Rührwerkskugelmühle, eine Zerkleinerung von Rohpartikeln von Aluminiumoxid erfolgen, um die Partikel von Aluminiumoxid mit einer mittleren volumetrischen Partikelgröße d50 von 10 bis 1500 nm und einer mittleren Partikelgröße d95 von 400 bis 2000 nm bereitzustellen. Entsprechend kann hierbei eine, insbesondere homogene, Mischung mit entionisiertem Wasser und ggf. weiteren Stoffen (Bindemittel, Hilfsmittel) durch eine Kombination eines Zerkleinerungs- und eines Dispergierungsverfahrens bereitgestellt werden. Hierdurch kann die erfindungsgemäß erhaltene Mischung aus dem kombinierten Verfahrensschritt eine enge Partikelgrößenverteilung, insbesondere mit einer volumenbezogenen Normalverteilung (Gaußverteilung), gemessen z.B. mittels Laserbeugungsverfahren, aufweisen.

Gemäß bestimmten Ausführungsformen wird der, insbesondere homogenen, Suspension in der Rührwerkskugelmühle noch weitere Bindemittel und/oder Hilfsmittel zugegeben, sodass auch diese gut vermischt werden können, insbesondere homogen.

Beispielhafte erfindungsgemäße Verfahren zur Herstellung eines Grünkörpers sind schematisch in Figuren 2 und 3 gezeigt. Im in Figur 2 gezeigten Verfahren erfolgt nach einem Schritt des Bereitstellens von Aluminiumoxidpartikeln 3 ein Schritt des Vermischens mit entionisiertem Wasser 4, gefolgt von einem Schritt des Vertropfens 5. Im in Figur 3 gezeigten Verfahren werden die Schritte des Bereitstellens von Partikeln von Aluminiumoxid und des Vermischens mit entionisiertem Wasser in einem Schritt 3' kombiniert, beispielsweise in einer Mühle, insbesondere eine Rührwerkskugelmühle.

Ein weiterer Aspekt der vorliegenden Erfindung betrifft die Verwendung eines erfindungsgemäßen sphärischen Aluminiumoxidkörpers zur Aufbereitung von Aluminiumoxid-Rohstoffen, insbesondere von Aluminiumoxid-Rohstoffen mit einem Al₂O₃-Gehalt von 99,0 Gew.% oder mehr. Insbesondere kann der erfindungsgemäße sphärische Aluminiumoxidpartikel als Mahlkugel verwendet werden, und zeichnet sich durch hohe Verschleißfestigkeit aus.

Zudem offenbart ist die Verwendung eines erfindungsgemäßen sphärischen Aluminiumoxidkörpers oder eines erfindungsgemäßen Grünkörpers zur Fertigung von Saphiren, insbesondere monokristallinen Saphiren. Hierbei kann die Fertigung beispielsweise durch eine Einkristall- bzw. Impfkristallmethode erfolgen, welche nicht besonders beschränkt. Insbesondere durch die hohe Dichte und geringe Zahl an Einschlüssen ergeben sich vorteilhafte Saphire.

Ebenfalls offenbart ist die Verwendung eines erfindungsgemäßen sphärischen Aluminiumoxidkörpers zur Fertigung von elektronischen und/oder optischen Komponenten. Insbesondere können Vorstufen für elektronische und/oder optische Komponenten unter Verwendung des erfindungsgemäßen sphärischen Aluminiumoxidkörpers hergestellt werden. Beispielsweise ist eine Anwendung in Batterien, beispielsweise für beschichtete Membranen, z.B. als poröse Beschichtung von Separatoren zur Verbesserung der thermischen Stabilität und/oder zur Verhinderung von Kurzschlüssen, oder in Spiegeln in Optiken denkbar.

Noch weiter betrifft die vorliegende Erfindung die Verwendung eines erfindungsgemäßen sphärischen Aluminiumoxidkörpers als Füllmaterial, z.B. Füllkörper, beispielsweise für Kunststoffe.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiel 1: und Vergleichsbeispiel 1

Zu einer Mischung aus entionisiertem Wasser und Rohstofffeinstpartikeln aus Aluminiumoxid mit 99,99 % Al₂O₃ mit einer Größe zwischen 10 und 700 nm wurde ein Dispergierhilfsmittel auf Basis eines anionischen Polyelektrolyts in verschiedenen Mengen von 0,2 bis 1,5 Gew.% gegeben, wobei sich ein Anteil von 1,0 Gew.% als optimal erwies.

Zudem wurde ein Polysaccharid als Binder bzw. Bindemittel in einer Menge von 0,4 bis 1,4 Gew.% gegeben, wobei sich hierbei eine Menge von 1,0 Gew.% Binder als optimal erwies.

Eine Messung der Viskosität mittels eines Rheometers nach DIN 53019-1 und einem Platte-Kegel-Systems des so erhaltenen Schlickers ergab einen Wert von 2.200 mPas, wobei diese hier auf eine Zielgröße von 0,5 mm angepasst wurde.

Aus dem Schlicker wurden dann mittels eines Vertropfungsverfahrens über Düsen und/oder Kanülen, formstabil sphärische Grünkörper der Größen 0,3 bis 1,8 mm durch Eintauchen sowie Reaktion in einer Salz-Lösung erhalten. Die Düsen und/oder Kanülen stehen hierbei in einem Winkel zwischen 45 und 90° zur Reaktionslösung und geben Tropfen in einer Frequenz von 1 bis 10.000 pro Sekunde ab.

Die Grünkörper wurden im Anschluss zu erfindungsgemäßen gesinterten sphärischen Körper durch ein Sinterverfahren geformt. Die Sintertemperatur lag zwischen 1550 und 1650°.

Die Verschleißfestigkeit der Körper wurde nach dem Sinterschritt zwischen 1550 und 1650°C bestimmt. Als Mühle wurde eine Laborrührwerkskugelmühle Netzsch Typ MiniCer (Netzsch Feinmahltechnik, Selb / Bayern) verwendet.
Es wurden die folgenden Parameter verwendet:
Mahlraum: Polyurethan
Rührer: Polyethylen (PE)
Füllgrad: 85 Vol%
Drehzahl: 3250 U/min (≙ 10 m/s)
Mahlprodukt: wässrige Aluminiumoxid-Suspension
Mahlkörpergröße: 0,4 - 0,6 mm
Testdauer / Zyklen: 6 h

Die Ergebnisse werden dann als Massendifferenz vor und nach der Verschleißmessung bestimmt und daraus der Masseverlust (in %). Es ergab sich ein Verschleiß von 0,43 % bei einer Testdauer von 6 h.

Mit gleichen Testparametern wurden Kugeln aus dem Wirbelschichtgranulationsverfahren als Vergleichsbeispiel 1 getestet, welche gemäß US20010029229 A1 hergestellt wurden. Anzumerken ist hierbei, dass die Kugeln des Vergleichsbeispiels aufgrund der Nebenbestandteile wie MgO nicht mit einer Reinheit des Aluminiumoxids von 99,99 % hergestellt werden konnten. Am Ende der Testdauer von 6 h wurde ein Masseverlust, d.h. ein Verschleiß von 2,11 %, ermittelt.

Zudem wurde die Dichte der sphärischen Aluminiumoxidkörper des Beispiels 1 und des Vergleichsbeispiels 1 mittels eines Helium-Gaspyknometers bei einer Temperatur von 20°C, wie oben beschrieben, bestimmt.

Für die sphärischen Aluminiumoxidkörper des Beispiels 1 ergab sich eine Dichte von 3,95 g/cm³, was 99% der theoretischen Dichte entspricht, wohingegen für die Kugeln des Vergleichsbeispiels 1 eine Dichte von 3,85 g/cm³ ermittelt wurde, was nur 96,5% der theoretischen Dichte entspricht. Als Wert für die theoretische Dichte wird der Wert 3,99 g/cm³ herangezogen.

Für gesinterte sphärische Aluminiumoxidkörper wurde zudem eine Analyse mittels Retsch Camsizer® hinsichtlich des Wertes des Breiten- zu Längenverhältnis (b/l₃) gemacht. In Tabelle 1 sind hierzu die Werte für das Beispiel 1 gezeigt.

**Tabelle 1: Messwerte von beispielhaften gesinterten sphärischen Aluminiumoxidkörpern**

| Kornklasse [mm] | P3 [%] | Q3 [%] | b/l₃ |
|---|---|---|---|
| 0.000 - 0.100 | 0.00 | 0.00 | |
| 0.100 - 0.150 | 0.00 | 0.00 | |
| 0.150 - 0.200 | 0.00 | 0.00 | |
| 0.200 - 0.250 | 0.00 | 0.00 | |
| 0.250 - 0.300 | 0.00 | 0.00 | |
| 0.300 - 0.350 | 0.00 | 0.00 | |
| 0.350 - 0.400 | 0.00 | 0.00 | |
| 0.400 - 0.450 | 4.43 | 4,43 | 0.933 |
| 0.450 - 0.500 | 55.14 | 59.57 | 0.953 |
| 0.500 - 0.550 | 39.12 | 98.69 | 0.958 |
| 0.550 - 0.600 | 1.31 | 100.00 | 0.900 |
| 0.600 - 0.650 | 0.00 | 100.00 | |
| 0.650 - 0.700 | 0.00 | 100.00 | |
| 0.700 - 0.750 | 0.00 | 100.00 | |
| 0.750 - 0.800 | 0.00 | 100.00 | |
| > 0.800 | 0.00 | 100.00 | |

Für die gesinterten Körper des Beispiels 1 wurde ein Wert b/l₃ von 0.954 ermittelt und als Kenngrößen wurden für Q3 [%] für 10, 50 und 90 x-Werte [mm] von 0.460, 0.493 und 0.526 ermittelt, wodurch eine enge und homogene Korngrößenverteilung nachgewiesen wird.

Für die gesinterten Körper des Vergleichsbeispiels 1 wurden demgegenüber Q3 [%] für 10, 50 und 90 x-Werte [mm] von 0.489, 0.547 und 0.582 mm mit einem Wert b/I3 von 0,985 erhalten.

Die gesinterten sphärischen Körper aus hochreinem Aluminiumoxid wurden zudem hinsichtlich des inneren Gefüges und der Oberflächenstrukturen mit Lasermikroskopie analysiert. Das innere Gefüge wurde mit den sphärischen Körpern, welche über das WirbelschichtGranulationsverfahren gefertigt sind, verglichen.

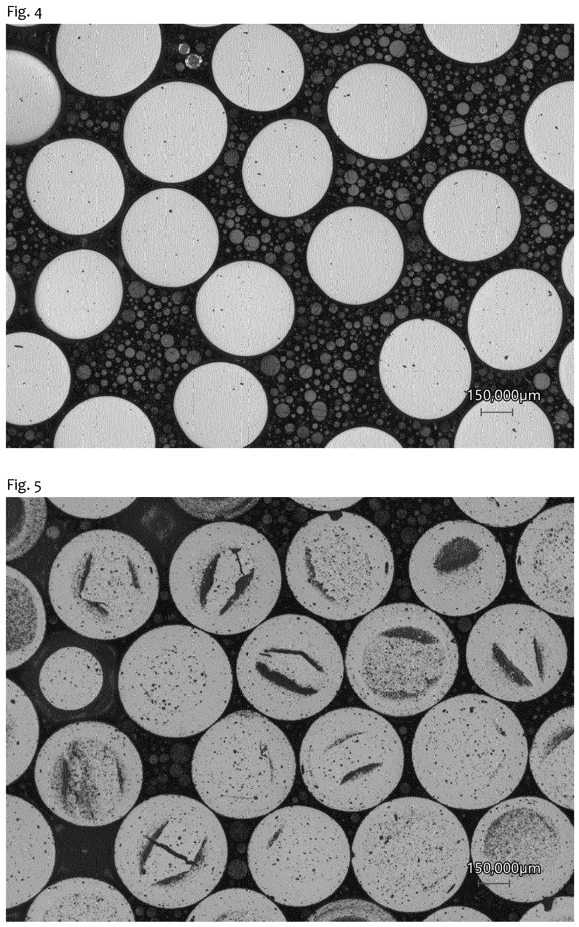

Beispielhaft nach diesem Verfahren untersuchte gesinterte Körper und Körper aus dem Wirbelschichtgranulationsverfahren sind hinsichtlich des inneren Gefüges in den Figuren 4 und 5 gezeigt. Es zeigt sich deutlich, dass die erfindungsgemäßen gesinterten Aluminiumoxidkörper eine geringere Rauheit und geringere Porenzahl haben und ein porenfreies inneres Gefüge aufweisen. Hingegen weisen die sphärischen Körper aus dem WirbelschichtGranulationsverfahren einen deutlich höheren Porenanteil im Inneren auf, in Übereinstimmung mit der Literatur, z.B. G. Bertrand et al., "Spray-dried ceramic powders: A quantitative correlation between slurry characteristics and shapes of the granules", Chemical Engineering Science, 2005, S. 95-102, und S. Eckhard et al., "Influence of varied suspension properties on properties of spray-dried granules", ICLASS 2012, 12th Triennial International Conference on Liquid Atomization and Spray Systems, Heidelberg, Germany, September 2-6, 2012.

Darüber hinaus wiesen die sphärischen Körper aus dem Wirbelschicht-Granulationsverfahren auch eine breite Korngrößenverteilung auf, wohingegen für die erfindungsgemäßen sphärischen Körper im Beispiel 1 eine enge Größenverteilung erhalten werden konnte, sodass hier auch weniger Aufwand im Hinblick auf eine nachträgliche Klassierung und Siebung erforderlich ist.

## Patentansprüche

1. Sphärischer Aluminiumoxidkörper, umfassend Al₂O₃ in einer Menge von 99,900 und 99,995 Gew.%, bezogen auf den sphärischen Aluminiumoxidkörper, wobei der sphärische Aluminiumoxidkörper ein Breiten- zu Längenverhältnis (b/l₃) von 0,900 bis 0,999, eine Dichte von 3,91 bis 3,98 g/cm³ und eine Größe von 0,01 bis 1,80 mm aufweist.

2. Sphärischer Aluminiumoxidkörper gemäß Anspruch 1, weiter umfassend mindestens ein Oxid eines Metalls M, bevorzugt mindestens eines Metalls M, das ausgewählt ist aus Calcium, Eisen, Magnesium, Silizium, Titan, Zirkonium und Mischungen davon.

3. Sphärischer Aluminiumoxidkörper gemäß Anspruch 2, wobei der Gehalt an Oxid des mindestens eines Metalls M >0 bis 100 mg/kg beträgt.

4. Sphärischer Aluminiumoxidkörper gemäß einem der vorstehenden Ansprüche, der ein inneres Gefüge mit einem Porenanteil im Bezug zur Gesamtfläche von ≤ 0,1 % aufweist.

5. Grünkörper, umfassend eine Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen, wobei der Grünkörper ein Breiten- zu Längenverhältnis (b/l₃) von 0,900 bis 0,999 und eine Größe von 0,010 bis 2,500 mm aufweist.

6. Grünkörper gemäß Anspruch 5, wobei der Grünkörper weiter mindestens ein Bindemittel in einer Menge von >0 bis 3,5 Gew.%, bezogen auf den Grünkörper, umfasst.

7. Grünkörper gemäß Anspruch 5 oder 6, wobei der Grünkörper eine Grünkörperdichte von 75 bis 99 % der theoretischen Dichte von hochreinem Aluminiumoxid aufweist.

8. Verfahren zum Herstellen eines sphärischen Aluminiumoxidkörpers nach einem der Ansprüche 1 bis, 4, umfassend:
Bereitstellen eines Grünkörpers nach einem der Ansprüche 5 bis 7, und
Sintern des Grünkörpers bei einer Temperatur von 1200 bis 1800°C.

9. Verfahren zum Herstellen eines Grünkörpers nach einem der Ansprüche 5 bis 7, umfassend:
Bereitstellen einer Mischung aus Partikeln von Aluminiumoxid mit einer mittleren volumetrischen Partikelgröße d50 von 10 bis 1500 nm und einer mittleren Partikelgröße d95 von 400 bis 2000 nm, wobei die Partikel von Aluminiumoxid Al₂O₃ in einer Menge von 99,90 und 99,995 Gew.%, bezogen auf die Partikel, aufweisen;
Vermischen der Mischung aus Partikeln von Aluminiumoxid mit entionisiertem Wasser zur Herstellung einer Grünkörperrohmischung bis zum Erreichen eines Feststoffgehalts von 40 bis 80 Gew.%, bezogen auf die Grünkörperrohmischung; und
Vertropfen der Grünkörperrohmischung zu einem Grünkörper.

10. Verfahren nach Anspruch 9, wobei zur Grünkörperrohmischung weiter >0 bis 3,5 Gew.% mindestens eines Bindemittels und/oder und >0 bis 3 Gew.% mindestens eines Dispergierhilfsmittels gegeben werden, bevor diese zu einem Grünkörper vertropft wird.

11. Verfahren nach Anspruch 9 oder 10, wobei das Vertropfen der Grünkörperrohmischung in eine Reaktionslösung erfolgt, die Ionen aus Salzen und entionisiertes Wasser enthält. Hierfür wird eine Lösung bestehend aus entionisiertem Wasser und Salzen angesetzt. Der Anteil der Ionen aus Salzen kann bis zur maximalen Löslichkeit der eingesetzten Salze im Wasser betragen.

12. Verfahren nach einem der Ansprüche 9 bis 11, wobei die Mischung aus Partikeln von Aluminiumoxid mittels eines Zerkleinerungs- und/oder eines Dispergierungsverfahrens in einer Rührwerkskugelmühle hergestellt wird.

13. Verwendung eines sphärischen Aluminiumoxidkörpers nach einem der Ansprüche 1 bis 4 zur Aufbereitung von Aluminiumoxid-Rohstoffen.

14. Verwendung eines sphärischen Aluminiumoxidkörpers nach einem der Ansprüche 1 bis 4 oder eines Grünkörpers nach einem der Ansprüche 5 bis 7 zur Fertigung von Saphiren.

15. Verwendung eines sphärischen Aluminiumoxidkörpers nach einem der Ansprüche 1 bis 4 zur Fertigung von elektronischen und/oder optischen Komponenten.

16. Verwendung eines sphärischen Aluminiumoxidkörpers nach einem der Ansprüche 1 bis 4 als Füllmaterial.
